# EUROPEAN PATENT SPECIFICATION

(11) **EP 3 818 912 B1**
(45) Date of publication and mention of the grant of the patent: **26.10.2022**
(21) Application number: 20205862.4
(22) Date of filing: 05.11.2020
(51) Int. Cl.: G05B 15/02, G05D 1/02, G05D 1/00, A47J 27/16, A47J 27/14, A47J 36/32, A47J 39/00

(54) **SMART PLATFORM DEVICE**
INTELLIGENTE PLATTFORM VORRICHTUNG
DISPOSITIF DE PLATE-FORME INTELLIGENT

(30) Priority: 05.11.2019 US 201962930664 P; 12.02.2020 CN 202010095044
(43) Date of publication of application: 12.05.2021
(73) Proprietor: Wei, Hong-Fan, Taipei City 11445 (TW)
(72) Inventor: Wei, Hong-Fan, Taipei City 11445 (TW)
(74) Representative: Viering, Jentschura & Partner mbB Patent- und Rechtsanwälte

(56) References cited:
- EP-A1- 2 500 871
- US-A1- 2015 227 127
- US-A1- 2019 025 850

## Description

### FIELD OF THE DISCLOSURE

The present disclosure relates to a smart platform device and smart system thereof, and more particularly to a smart platform device and smart system thereof capable of moving and providing services according to needs of a user.

### BACKGROUND OF THE DISCLOSURE

US 2015/227127 A1 discloses a smart platform device comprising: a main body including a platform being a plane for placement of an object, one or more closed or open storage spaces, and a power source device configured to supply electric power to an electronic device; and a circuit system including a wireless communication module electrically connected to the control circuit, and configured to wirelessly interconnect to an external device; a power management circuit electrically connected to the control circuit, and including a circuit connected to an alternating-current power source and a circuit connected to a power storage device; and a charging circuit electrically connected to the power management circuit, and configured to provide the electric power supplied by the power source device.

Further smart platform devices are known from EP 2 500 871 A1 and US 2019/025850 A1.

As technology advances, various applications for the daily convenience of humans are created accordingly, such as robots designed based on human needs, autopilot technology, various mobile technologies, or smart technology capable of learning human behaviors and needs.

For example, a reception robot capable of automatically walking around an exhibition or company can approach and greet incoming guests, and query them for required services. For example, autopilot technology is capable of machine learning to perform autopilot according to the surrounding environmental conditions, and providing a better way of driving by learning driving habits of a driver.

Taking a common household as an example, there may be a smart speaker configured to provide music and voice services, and a robot configured to automatically provide medicinal notifications and emergency detections.

### SUMMARY OF THE DISCLOSURE

In response to the above-referenced technical inadequacies, the present disclosure provides a smart platform device according to claim 1 and smart system thereof according to claim 12 capable of providing services according to user commands and actively providing services based on learning results from common households, offices, or specific occasions.

Further embodiments of the said smart platform device and the smart system thereof are provided by the dependent claims, respectively.

According to one embodiment, a main body of the smart platform device includes a driving system configured to drive the smart platform device moving in a space, a platform being a plane for placement of an object. The smart platform device further includes one or more closed or open storage spaces, a power source device configured to supply electric power to an electronic device, such as a charging socket or a wireless charging device occupying a location on the plane.

Further, the smart platform device includes a circuit system including a control circuit and a circuit element electrically connected to the control circuit, wherein the control circuit is configured to control the smart platform device operating in the space and is electrically connected to a driving circuit of the driving system, and the driving circuit is configured to drive the smart platform device moving by a driving unit of the driving circuit. The circuit system further includes a wireless communication module configured to wirelessly interconnect to an external device, such as a user device, to perform wireless communication with the user device. The wireless communication module is further configured to obtain a relative direction and a relative distance between the user device and the smart platform device by a function of positioning. The circuit system further includes a power management circuit including a circuit connected to an alternating-current power source and a circuit connected to a power storage device. The circuit system includes a charging circuit configured to provide the electric power supplied by the power source device.

Further, the wireless communication module is configured to perform a direction and a distance probing by transmitting and receiving wireless signals in order to perform an interior positioning, and wirelessly interconnect to the user device in order to receive a command generated by the user device.

An application program is executed by the user device to interconnect to the smart platform device for wireless communication therebetween, and to generate a command for controlling the smart platform device.

The application program allows the user to operate the user device, and can convert a text, hand written or voice into a command for controlling the smart platform device.

Further, the circuit system of the smart platform device further includes a charging driving circuit configured to control a driving mechanism to drive the charging interface moving toward the electronic device according to a command generated by the control circuit.

The circuit system of the smart platform device can, in addition to the abovementioned elements, further include a speaker configured to generate a voice message for communicating with a user, and a microphone configured to receive the voice to be interpreted by the control circuit to generate a command for controlling the smart platform device. The circuit system can also include a temperature control circuit configured to switch a current direction of a temperature control box in the smart platform device to realize a cooling zone or a heating zone.

In one embodiment of the smart system, the smart system includes a server system and one or more smart platform devices, the one or more smart platform devices are interconnected to the server system by means of communication to be under control of the server system.

In one embodiment (which is not explicitly defined in the claim set), the smart system includes a door access control system connected to a doorbell device, when a signal generated by the doorbell device is received by the server system, the server system notifies a smart platform device to allow the smart platform device to notify the user, and the smart platform device await an access control command from the user.

In another embodiment, the smart system includes a video/audio playing system, the video/audio playing system includes an amplifier, a speaker system, and is connected to a video/audio source, such that the smart platform device can operate the video/audio playing system according to user's command.

These and other aspects of the present disclosure will become apparent from the following description of the embodiment taken in conjunction with the following drawings and their captions.

### BRIEF DESCRIPTION OF THE DRAWINGS

The present disclosure will become more fully understood from the following detailed description and accompanying drawings.
FIG. 1 illustrates a schematic view of a smart platform device according to an embodiment of the present disclosure.
FIG. 2 illustrates a functional block diagram of a circuit system of the smart platform device according to an embodiment of the present disclosure.
FIG. 3 illustrates a functional block diagram of circuits for charging in the smart platform device according to an embodiment of the present disclosure.
FIG. 4 illustrates a schematic view of a movable wireless charging interface on the smart platform device according to an embodiment of the present disclosure.
FIG. 5 illustrates a schematic view of localizing an electronic device on the smart platform device according to an embodiment of the present disclosure.
FIG. 6 illustrates a schematic view of a smart system realized by a plurality of smart platform devices according to an embodiment of the present disclosure.
FIG. 7 illustrates a flowchart of operations of the smart platform device according to an embodiment of the present disclosure.
FIG. 8 illustrates a flowchart of the smart platform device performing a voice command according to an embodiment of the present disclosure.
FIG. 9 illustrates a flowchart of the smart platform device providing services according to an embodiment of the present disclosure.
FIG. 10 illustrates a flowchart of the smart platform device performing voice control according to an embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

A smart platform device and a smart system thereof are provided in the present disclosure, in which a smart platform device capable of moving according to commands or self-determination results is provided. In various embodiments, the smart platform device may be a movable desk having wheels (or any device that can drive the platform to move) and a driving motor, the movable desk has facilities that a regular desk has, such as drawers and storage spaces, and the movable desk includes a charging socket or wireless charging device.

The smart platform device has a function of wireless communication to be able to wirelessly interconnect to other external devices. For example, a user may operate a computer device or a mobile device (a user device is collectively called) to interconnect to the smart platform device by wireless communication, and execute a specific application program (APP) to control the smart platform device to move. For example, the user may operate the user device to transmit a command to the smart platform device by the application program in order to request the smart platform device to move to a specific location, such as where the user is located, so the user may use a facility of the smart platform device.

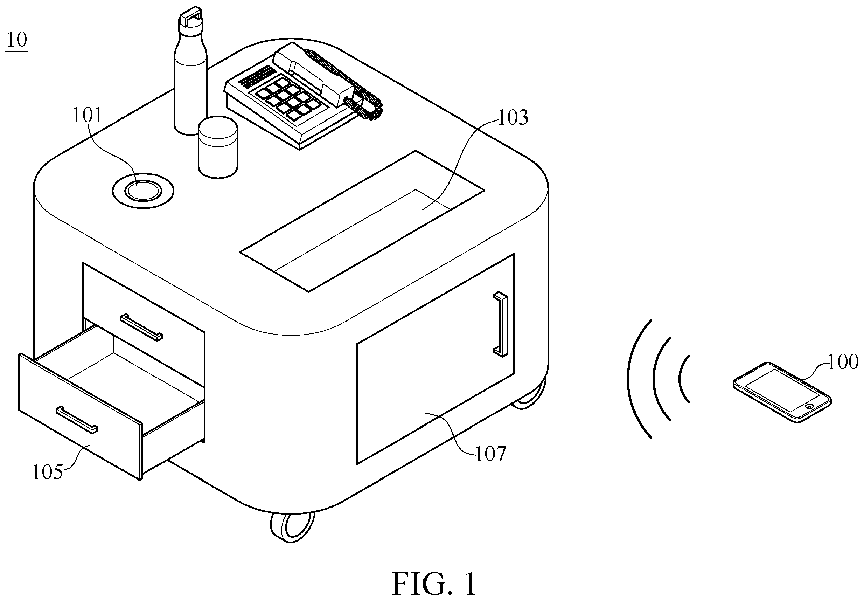

Reference is made to FIG. 1, in which FIG. 1 illustrates a schematic view of a smart platform device according to an embodiment of the present disclosure. FIG. 1 illustrates a smart platform device 10 in a form of a desk, a plurality of objects disposed on a platform of the smart platform device 10, one or more storage spaces (i.e., a first storage space 103 and a second storage space 105) for containing objects, such as containing grooves and drawers in the platform of the smart platform device 10, and a charging socket or wireless charging device (that is integrated under a wireless charging zone 101) for charging electronic devices such as the user device (e.g., a mobile device).

The smart platform device 10 illustrated in the embodiment of FIG. 1 is a movable desk that has any kinds of shape, any object (such as a water bottle and a telephone shown in FIG. 1) can be disposed on the platform of the movable desk, and an electronic device supporting wireless charging can be disposed on the wireless charging zone 101 to perform charging. The first storage space 103 may be a containing groove for containing objects. The second storage space 105 may be a drawer for containing objects. The smart platform device 10 (according to the embodiment of Fig. 1) includes a temperature control box 107 built-in with a thermoelectric cooling chip, in which a cooling zone or heating zone in the temperature control box 107 may be realized by switching a current direction of the thermoelectric cooling chip. In addition, the user may execute an application program installed in the user device 100 to remotely control the smart platform device 10, such as setting an operating time, an operating route and conditions for executing a specific function, and control the smart platform device 10 by inputting a text, hand written or voice into the application program.

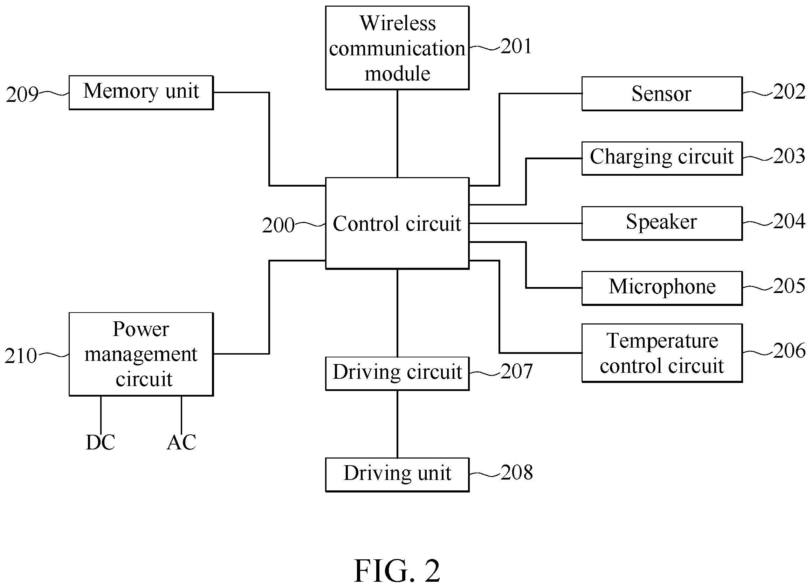

A main body of the smart platform device 10 includes a driving system capable of driving a device to move in a space, a platform being a plane for placement of an object, one or more closed or open storage spaces (e.g., the first storage space 103 and the second storage space 105), and a power source device capable of suppling electric power to an electronic device. Reference is made to FIG. 2, in which FIG. 2 illustrates a functional block diagram of a circuit system of the smart platform device according to an embodiment of the present disclosure.

The circuit system of the smart platform device is shown in FIG. 2, the circuit system includes a control circuit 200 configured to control the whole operation of the smart platform device, in which the control circuit 200 includes a processor and a memory cooperated to perform any kinds of signal processing, and the circuit system further includes a plurality of peripheral circuit elements electrically connected to the control circuit 200.

According to the embodiment in FIG. 2, a key element such as the control circuit 200 is configured to control the smart platform device to operate in a space, a peripheral circuit element such as a driving system electrically connected to the control circuit 200 includes a driving circuit 207, and the control circuit 200 controls a driving unit 208 by the driving circuit 207. The driving unit 208 is electrically connected to the driving circuit 207, which may be wheels and tracks enabling the smart platform device to move, and further includes some mechanical structures enabling the smart platform device to move in the space.

A wireless communication module 201 in FIG. 2 is configured to wirelessly interconnect to external devices such as the user device, and transmit messages and commands after an interconnection is made. The wireless communication module 201 is further configured to perform a direction and a distance probing by transmitting and receiving wireless signals to perform functions such as interior positioning, signal source response, etc. For the user device, the smart platform device may obtain a relative direction and a relative distance between the user device and the smart platform device by performing a function of positioning of the wireless communication module of the circuit system, so as to approach the user to provide services such as object placement of an object, charging, and providing cold or hot supplies.

A power management circuit 210 includes a circuit connected to an alternating-current (AC) power source and a circuit connected to a direct-current (DC) power storage device such as a battery, and configured to charge the power storage device when the smart platform device is connected to the alternating-current (AC) power source, afterwards, the smart platform device is able to supply electric power by the charging circuit 203. The power source device may be a charging socket or wireless charging device, and includes a wired charging circuit and a wireless charging circuit that are configured to charge other appliances. As shown in FIG. 1, the wireless charging device occupies a wireless charging zone 101 on the platform of the main body of the smart platform device 10.

The circuit system includes at least a location sensing circuit and may further include one or more sensors 202, such as an image sensor, a distance sensor and the like, and one or more environmental sensors, such as a smoke sensor, a temperature sensor, a humidity sensor and the like. Taking an image sensor as an example, the image sensor is configured to obtain images of the space where the smart platform device is located. The image sensor may be a camera configured to capture peripheral environment images, so that the smart platform device is able to perform recording, image recognition, collision avoidance during operations, security and care, etc. Furthermore, the image sensor is further configured to cooperate with a lidar, so that the smart platform device is able to perform collision avoidance according to light impulse distance measurement and machine learning.

The circuit system (according to the embodiment) includes a speaker 204 configured to generate sounds and a voice message for communication with the user, and a microphone 205 configured to receive voices, in which a command for controlling the smart platform device is generated by performing interpretation, semantic analysis and determination to the voices by the control circuit 200. The circuit system (according to the embodiment) includes a temperature control circuit 206 configured to control a temperature of the temperature control box in the smart platform device. The temperature control box is built-in with a thermoelectric cooler, in which the temperature control circuit 206 switches a current direction of the thermoelectric cooler to realize cooling or heating according to user needs, thereby realizing a cooling zone or heating zone in the temperature control box.

The circuit system (according to the embodiment) further includes a memory unit 209 being a memory device of the circuit system, and configured to store operational related data, sensing data, etc.

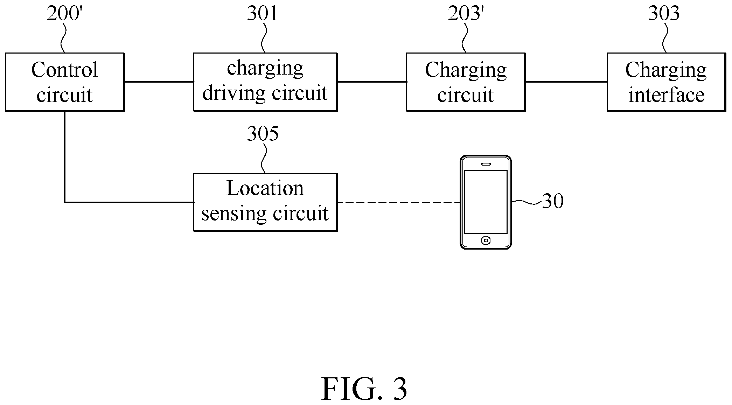

FIG. 3 illustrates a functional block diagram of circuits for charging in the smart platform device according to an embodiment of the present disclosure. The circuit system of the smart platform device further includes a circuit configured to drive a charging interface moving on the platform by any feasible mechanisms (e.g., axles, gears, levers, etc.).

Regarding implementations of driving the charging interface, FIG. 3 illustrates a circuit system of the smart platform device (some circuit elements are not shown in FIG. 3) according to another embodiment of the present disclosure. The circuit system includes a control circuit 200' electrically connected to a charging driving circuit 301, the charging driving circuit 301 is connected to a charging circuit 203', and the charging circuit 203' is connected to the charging interface 303 by any feasible driving mechanisms. The charging interface 303 may be an output interface device of a wireless charging device, disposed on the platform of the smart platform device, and configured to be a wireless charging interface between the charging circuit 203' and an electronic device.

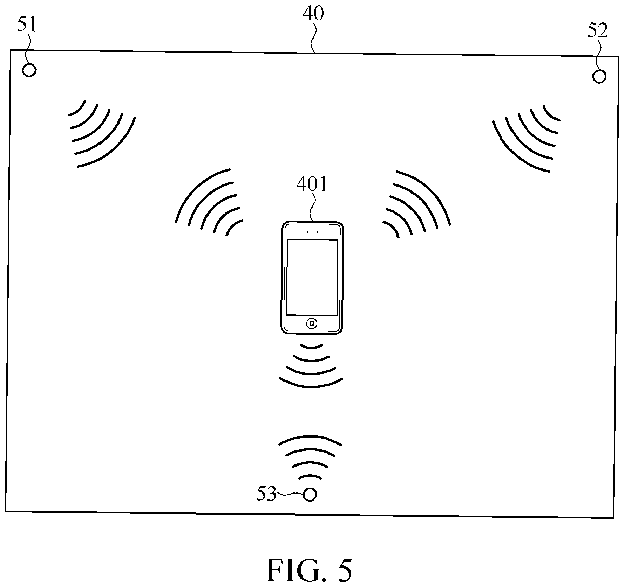

The circuit system further includes a location sensing circuit 305 electrically connected to the control circuit 200', and configured to sense an electronic device disposed on the smart platform device by sensing light waves, sound waves, or using pressure sensor (e.g., a thin-film pressure sensor that can sense pressure). If it is desired to sense a location where the electronic device can be wirelessly charged, then a location (coordinate) of the electronic device on the platform can be obtained by a signal sensing technology, reference of which is made to FIG. 5.

An electronic device 30 may be a device supporting wireless charging, such as a mobile device of the user, and the location sensing circuit 305 may sense a location of the electronic device 30 on the platform when the electronic device 30 is disposed on the platform of the smart platform device; meanwhile, the control circuit 200' generates a location signal being a command provided to the charging driving circuit 301, and the charging driving circuit 301 drives the charging interface 303 moving toward the electronic device 30 by a driving mechanism according to the command generated by the control circuit 200'.

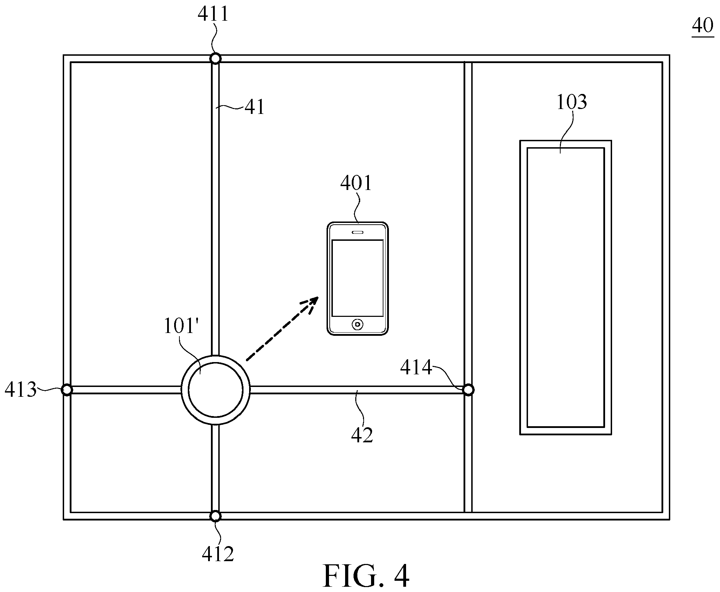

FIG. 4 illustrates a schematic view of an electronic device 401 disposed on a platform 40 of the smart platform device according to an embodiment of the present disclosure. The circuit system and the operating system in the smart platform device may acknowledge a remaining electric power of the electronic device 401 according to a communication content when communicating with the electronic device 401. When the remaining electric power being lower than a threshold is determined, the circuit system may move to where the electronic device 401 is located according to signal strengths of transmitted and received signals, or by the help of surrounding sensors, so as to provide charging service. Particularly, the circuit system keeps communicating with the electronic device 401 during a charging process, so that the smart platform device can obtain an electric power state of the electronic device 401 to determine whether or not to keep charging, or enter a power-saving (sleep) state when the electronic device 401 is in a fully-charged state.

Reference is made to FIG. 4, in which a charging interface 101' automatically moves toward where the electronic device 401 is located. FIG. 4 illustrates a schematic view of a movable wireless charging interface on the smart platform device according to an embodiment of the present disclosure. The platform 40 includes the charging interface 101' that can move by a vertical axis driver 41 and a horizontal axis driver 42 driven by two-end driving mechanisms 411, 412, 413 and 414 (e.g., wheels and tracks). An operating methodology of the vertical axis driver 41 and the horizontal axis driver 42 is that a back-end circuit controls the driving mechanisms 411 and 412 to drive the vertical axis driver 41 to perform horizontal movements, and the driving mechanisms 413 and 414 to drive the horizontal axis driver 42 to perform vertical movements, so as to drive the charging interface 101' disposed at an intersection of the vertical axis driver 41 and the horizontal axis driver 42 to move toward any reachable location on the platform 40.

The back-end driving circuit refers to the charging driving circuit (the charging driving circuit 301 shown in FIG. 3) illustrated in FIG. 3, when the location of the electronic device 401 is sensed by a location sensing circuit, the control circuits generates a command to the charging driving circuit to drive the charging interface 101' moving to the location of the electronic device 401 by the vertical axis driver 41 and the horizontal axis driver 42.

In addition to sensing light waves, sound waves, or using pressure sensor as abovementioned to sense the location of the electronic device on the platform, a reference is made to FIG. 5, in which FIG. 5 illustrates a schematic view of localizing an electronic device on the smart platform device according to an embodiment of the present disclosure.

In the embodiment of FIG. 5, a plurality of positioning sensors 51, 52 and 53 configured to detect wireless radio-frequency signals transmitted by the electronic device 401 are disposed on the platform 40, the plurality of positioning sensors 51, 52 and 53 are commonly connected to the control circuit of the smart platform device, and a computing circuit of the control circuit (or an application specific integrated circuit (ASIC) for location calculation) is configured to compute the location of the electronic device 401.

For example, the positioning sensors 51, 52 and 53 may sense messages such as a received signal strength indication (RSSI) of the electronic device 401 by sensing wireless radio-frequency signals, and provide these messages to the control circuit (or the ASIC for location calculation). Afterwards, the control circuit may calculate distances between each of the positioning sensors 51, 52 and 53 and the electronic device 401, and calculate the location (coordinate) of the electronic device 401 on the platform 40 according to the distances and locations (coordinates) of the positioning sensor 51, 52 and 53. At this moment, the control circuit may generate the command provided to the charging driving circuit according to the messages associated with the location of the electronic device 401, so as to drive the charging plane to move to where the electronic device 401 is located.

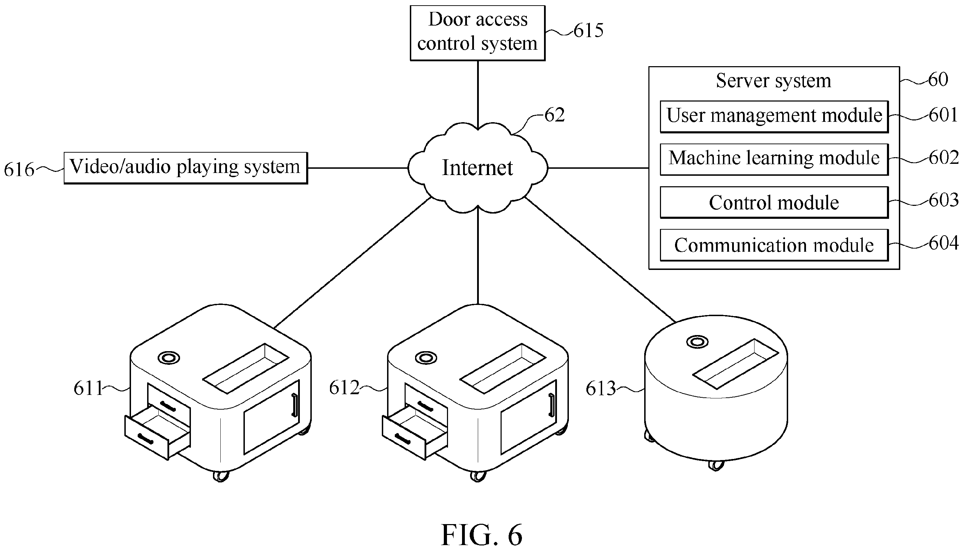

Then, reference is made to FIG. 6, in which FIG. 6 illustrates a schematic view of a smart system realized by a plurality of smart platform devices according to an embodiment of the present disclosure. The smart system illustrated in FIG. 6 includes a server system 60 disposed in a space (e.g., in a local area network, hereinafter abbreviated as LAN) where the smart platform device moves or a cloud. The smart platform device of the smart system is similar to that of the abovementioned embodiments, a plurality of smart platform devices 611, 612 and 613 illustrated in FIG. 6 include a wireless communication module configured to wirelessly interconnect to the server system 60 disposed in a specific space or the cloud, and thus the server system 60 can act as a service center in the LAN in order to provide services to the smart platform devices 611, 612 and 613 in the LAN. The server system 60 may be disposed in the cloud to be a cloud service system, and configured to control operations of the smart platform devices 611, 612 and 613 when it is interconnected to the smart platform devices 611, 612 and 613 through an internet 62.

The server system 60 includes a plurality of functional modules driven by software drivers and related computer technologies, such as a user management module 601 configured to store and manage users that have logged into the smart platform device. One or more smart platform devices can be disposed in each terminal place, the one or more smart platform devices can be controlled by the server system 60 when a user has logged into the server system 60, and the server system 60 can collect terminal data to establish a personal or group data file.

The server system 60 (according to the embodiment) includes a machine learning module 602 configured to receive data from the smart platform device to perform machine learning algorithm in order to learn user behaviors from the personal or group data file in the smart platform device, such as user's daily routines, so that the smart platform device can operate in a suitable mode in the space of the terminal place to avoid redundant operations.

For example, a wake-up time can be learned from the user's daily routines, so that the smart platform device can provide proper services based on the learned wake-up time, such as the temperature control box can be properly controlled to provide user's favorite drinks or food. Alternatively, a bed time can be learned from the user's daily routines, so that the smart platform device can remind the user of errands needed to be done before the user goes to bed, such as the smart platform device should be charged. Therefore, the electric power of the smart platform device can be properly controlled according to the user's daily routines, so as to be operated in a suitable mode.

The server system 60 (according to the embodiment) includes a control module 603 configured to process messages and data transmitted from the smart platform devices 611, 612 and 613, and generate a plurality of control commands to the smart platform devices 611, 612 and 613. The server system 60 includes a communication module 604 configured to perform communication with the smart platform devices 611, 612 and 613 or other devices. For example, when the user generates a control voice, the smart platform device transmits the control voice to the server system 60 through the internet 62, the control module 603 interprets the control voice to generate a voice command corresponding to the control voice, and a following operation can be performed by the smart platform device.

According to one embodiment, the smart system further includes a door access control system 615, in which the smart platform devices 611, 612 and 613 and the server system 60 are connected to the door access control system 615 through the internet 62. The door access control system 615 is connected to a doorbell device (not shown in FIG. 6) when a signal generated by the doorbell device is received by the server system, the server system 60 notifies a smart platform device to notify the user, and the smart platform device await an access control command from the user. The access control command can be generated according to a control message corresponding to the voice from the user, the voice can be interpreted by the smart platform device or the server system 60, the access control command can be generated by the user device after interpretation, the smart platform device can transmit a signal to notify the user according to the access control command, and the user may determine to open or close a door.

In another embodiment, the smart system includes a video/audio playing system 616 configured to be a hot spot control center of a household internet.

The smart system includes a video/audio playing system connected to the smart platform devices 611, 612 and 613 through the internet 62, and one of the smart platform devices 611, 612 and 613 can connect to and control the video/audio playing system 616 through the server system 60. The video/audio playing system 616 includes an amplifier, a speaker system, and is connected to a video/audio source, such that the smart platform device can operate the video/audio playing system according to a user's command.

For example, the user may execute an application program installed in the user device, a control interface of the application program may generate a command for controlling the video/audio playing system 616 to play a video/audio, or the user may input a text, hand written or voice to the user device, or the smart platform devices 611, 612 and 613 may transmit a control voice, in order to control the video/audio playing system 616.

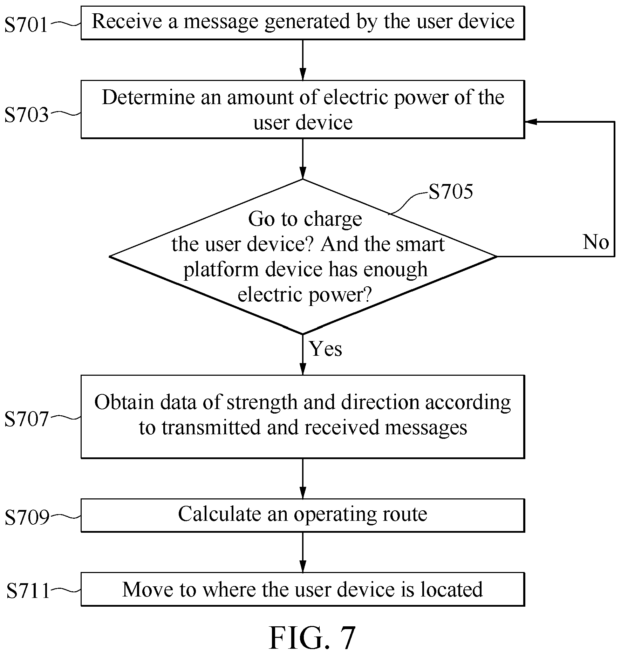

FIG. 7 illustrates a flowchart of operations of the smart platform device according to an embodiment of the present disclosure, in which a smart platform device obtains electric power data of a user device by an application program of a user device. The operations/methods are not part of the claim set, but are provided to enhance the understanding of the smart platform device and the smart system.

In this process of FIG. 7, when the smart platform device receives a message generated by the user device (step S701), data in the message can be analyzed, such as an amount of electric power of the user device can be determined (step S703), so that a processor in the smart platform device compares the amount of electric power with a threshold to determine whether or not to charge the user device. Also, the processor in the smart platform device determines whether or not the smart platform device has enough electric power (step S705). When the electric power of the user device being lower than the threshold is determined, the control circuit automatically controls the driving system to drive the smart platform device moving to where the user device is located, so that the smart platform device charges the user device by the power source device. Operations of charging the user device may be obtained by referring to descriptions regarding FIGS. 3, 4 and 5. When the user places the user device on the platform of the smart platform device, the location sensing circuit senses the location of the user device and drives the charging interface to move under the user device to wirelessly charge the user device.

If it is determined not to charge the user device, namely, there is no need to charge the user device, the process returns to step S703 and keeps receiving data of the amount of electric power of the user device. On the other hand, if it is determined to charge the user device, namely, there is a need to charge the user device, and the smart platform device has enough electric power, the smart platform device obtains data of strength and direction according to transmitted and received messages to determine a direction and a distance of a message source, so as to locate the user device (step S707). Afterwards, the smart platform device calculates a relative direction and a relative distance between the user device and the smart platform device, and takes obstacles around it into considerations to calculate an operating route (step S709). The smart platform device moves to where the user device is located, so that the user device can be charged (step S711). During the process, the smart platform device may transmit messages to the user device to update a current state.

The smart platform device has a function of positioning, in which the wireless communication module includes a directional antenna and a circuit or a software program configured to determine a signal strength, the smart platform device can determine the relative direction and the relative distance between the user device and the smart platform device according to wireless signals (e.g., Wi-Fi, Bluetooth^{®}) received by the wireless communication module in order to arrive at (approach) where the user device is located as soon as possible.

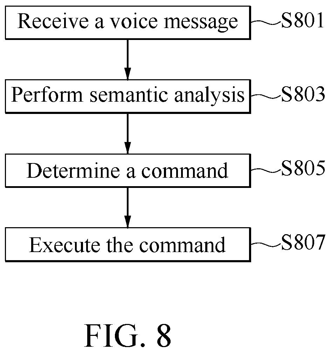

The smart platform device has a function of voice control, allowing the user to control the smart platform device by voice, and a processor in the smart platform device performs voice interpretation, semantic analysis and command determination to perform a specific operation, such as arriving at a specific location, e.g., where the user is located, self-charging, and the like. FIG. 8 illustrates a flowchart of the smart platform device performing a voice command according to an embodiment of the present disclosure.

When the smart platform device receives a voice message by a microphone (step S801), a processing procedure of the smart platform device starts to process a natural voice, or provides a voice command based on a certain standard. Then, the smart platform device performs the semantic analysis to interpret a message corresponding to the voice message (step S803). Afterwards, the smart platform device determines a command, for example, the command corresponding to the voice message can be obtained according to a command table (step S805). Then, the smart platform device performs the command; when a command is determined, the smart platform device performs the command according to a current operating state of the smart platform device (step S807).

It should be noted that, in addition to the voice control, the user may input the command by inputting a text or hand written to the application program of the user device. That is to say, the application program executed by the user device can convert the text, hand written or voice into a command for controlling the smart platform device.

In one embodiment, when the smart platform device is operating (moving to where the user device is located), sensors such as a temperature sensor, a humidity sensor, an image sensor and a lidar included in the smart platform device are configured to sense environmental objects in order to avoid obstacles, and the smart platform device can learn an environmental object arrangement by machine learning algorithm, so as to calculate a shortest route between the smart platform device and a target location.

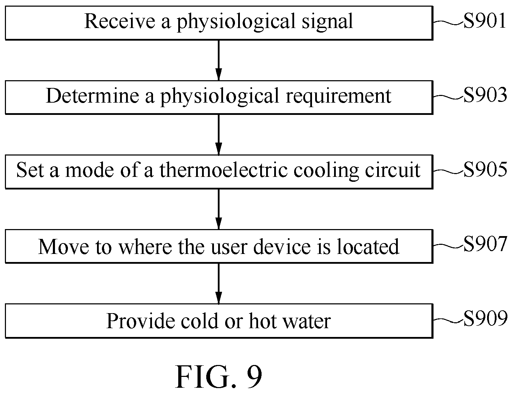

Since the smart platform device provided in the present disclosure has functions of positioning, communication and mobility, the smart platform device can further realize a function of household care, and the user may wear a physiological sensor, such as a sensing wristband configured to generate a physiological signal to the smart platform device by the user device. When the smart platform device obtains the physiological signal of the user by wireless communication technology, the smart platform device can perform calculation and comparison of the physiological signal to determine a physiological state of the user, so as to properly provide a service to the user, and the service includes contacting a relative, providing cold or hot water, and the like. FIG. 9 illustrates a flowchart of the smart platform device providing services according to an embodiment of the present disclosure.

In the process of FIG. 9, the smart platform device receives a physiological signal by wireless communication technology (step S901), in which the smart platform device regularly receives the physiological signal transmitted from the physiological sensing device of the user, and determines a physiological requirement according to data of the physiological signal (step S903); for example, the smart platform device provides a suitable service when a body temperature of the user indicating fever is received. Then, the smart platform device provides a suitable service according to the physiological requirement; for example, a temperature control device is set by the smart platform device (step S905), the smart platform device sets a mode of a thermoelectric cooling circuit according to the physiological requirement, so as to control the temperature control box performing cooling or heating. Then, the smart platform device calculates an operating route according to the relative direction and the relative distance between the user (the user device) and the smart platform device to move to where the user is located (step S907), in order to provide cold or hot water according to the physiological requirement, thereby providing cold or hot drinks to the user (step S909).

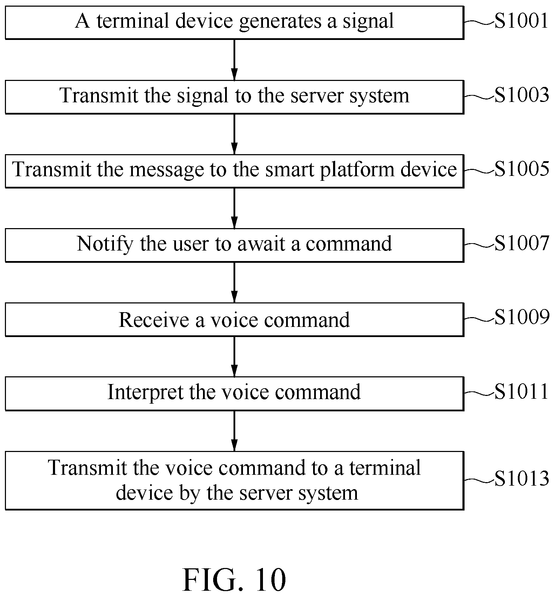

FIG. 10 illustrates a flowchart of the smart platform device performing voice control according to an embodiment of the present disclosure.

When a signal is generated by a terminal device, such as the door access control system and the doorbell device or the video/audio playing system in the abovementioned embodiment (step SI001), the signal can be transmitted to the server system through the internet (and necessary internet device)(step S1003), the signal is processed by the server system to generate a message provided to the user, and the message is transmitted to the smart platform device (step S1005), in which the message can be transmitted to the user device by voice broadcast, or a text or voice message, and the smart platform device awaits a command from the user (step SI007).

Afterwards, the user may input a voice command being a requirement to be received by the smart platform device (step S1009), the voice command can be interpreted by a software program installed in the smart platform device or the server system (step S1011), and finally the server system transmits the voice command to a terminal device that can be the user device or the smart platform device (step S1013). Taking the door access control system as an example, the smart platform device may perform operations according to the command, e.g., open a door; taking the video/audio playing system as an example, the smart platform device may generate a command for playing a specific video/audio.

To sum up, the smart platform device of the present disclosure can not only provide table services to an end user, but also act as a smart appliance configured to provide smart services by cooperation with external server systems, machine learning, and data analysis, so as to realize a smart household.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from the scope of the appended claims.

## Claims

1. A smart platform device (10) comprising:
a main body including:
a platform (40) being a plane for placement of an object, one or more closed or open storage spaces (105, 103), and a power source device configured to supply electric power to an electronic device (30); and
a circuit system including:
a wireless communication module (201) electrically connected to the control circuit (200), and configured to wirelessly interconnect to an external device,
a power management circuit (210) electrically connected to the control circuit (200), and including a circuit connected to an alternating-current power source (AC) and a circuit connected to a power storage device (DC), and
a charging circuit (203, 203') electrically connected to the power management circuit (210), and configured to provide the electric power supplied by the power source device,
**characterized in that**
the main body further includes a driving system configured to drive the smart platform device (10) moving in a space;
and **in that** the circuit system further includes
a control circuit (200) configured to control the smart platform device (10) operating in the space, the control circuit (200) being electrically connected to a driving circuit (207) of the driving system, and the driving circuit (207) controlling a driving unit (208) to drive the smart platform device (10) to move in the space, and
a location sensing circuit (305) electrically connected to the control circuit (200,200'), wherein the location sensing circuit (305) is configured to sense a location of the electronic device (30) on the platform (40) when the electronic device (30) is disposed on the platform (40),
wherein the control circuit (200,200') is configured to generate a location signal being a command provided to a charging driving circuit (301),
wherein the charging circuit (203, 203') is further electrically connected to the charging driving circuit (301) and a charging interface (303),
and wherein the charging driving circuit (301) drives the charging interface (303) according to the command generated by the control circuit (200,200').

2. The smart platform device of claim 1, wherein the power source device is a charging socket or a wireless charging device.

3. The smart platform device of claim 2, wherein the wireless charging device occupies a wireless charging zone (101) in the platform (40) of the main body.

4. The smart platform device of claim 1, wherein the circuit system further includes a positioning sensor (51, 52, 53) electrically connected to the control circuit (200) and configured to sense a location of the electronic device (30, 401) on the platform (40), and wherein the command provided to the charging driving circuit (301) is generated from a location signal generated by the control circuit (200).

5. The smart platform device of claim 1, wherein the wireless communication module (201) is configured to perform a direction and a distance probing by transmitting and receiving wireless signals to perform an interior positioning.

6. The smart platform device of claim 1, wherein the circuit system of the smart platform device further includes one or more sensors (202).

7. The smart platform device of claim 6, wherein the one or more sensors (202) include an image sensor electrically connected to the control circuit (200) and configured to obtain images of the space to perform recording and image recognition.

8. The smart platform device of claim 7, further including a lidar, wherein the image sensor is configured to cooperate with the lidar, such that the smart platform device avoids obstacles in the space when moving.

9. The smart platform device of claim 1, wherein the circuit system of the smart platform device further includes a speaker (204) configured to generate a voice message for communicating with a user and/or a microphone (205) configured to receive a voice that is interpreted by the control circuit (200) to be a command for controlling the smart platform device.

10. The smart platform device of claim 1, wherein the main body of the smart platform device further includes a temperature control box (107) built-in with a thermoelectric cooling chip, and a cooling zone or a heating zone of the temperature control box (107) is realized by a temperature control circuit (206) of the circuit system configured to switch a current direction of the temperature control box (107) .

11. The smart platform device of claim 1, wherein the wireless communication module (201) is configured to wirelessly interconnect to a server system (60) disposed in the space or a cloud.

12. A smart system comprising:
a user device (100),
and a smart platform device (10) according to any of the claims 1 to 11,
wherein the wireless communication module (201 is further configured to wirelessly interconnect to the user device (100) to receive a command generated by the user device (100), and wherein the wireless communication module (201) is further configured to perform a direction and a distance probing by transmitting and receiving wireless signals to perform an interior positioning.

13. The smart system of claim 12,
wherein the user device (100) is configured to execute an application program to interconnect to the smart platform device, to perform wireless communication with the smart platform device, and to generate a command for controlling the smart platform device;
wherein the smart platform device is configured to obtain electric power data of the user device (100) by the application program,
and wherein, when the electric power of the user device (100) is lower than a threshold, the control circuit (200) is configured to control the driving system to drive the smart platform device moving to where the user device (100) is located to charge the user device (100) by the power source device.

14. The smart system of claim 13, wherein the application program executed by the user device (100) is configured to convert a text command, a hand-written command or a voice command inputted by the user into the command for controlling the smart platform device.

15. The smart system of claim 13, wherein the smart platform device is configured to obtain a relative direction and a relative distance between the user device (100) and the smart platform device by performing a function of positioning of the wireless communication module (201) of the circuit system.

16. A smart system according to any of the claims 12 to 15, further comprising:
a server system (60) disposed in a local area network or a cloud; and
one or more smart platform devices (611, 612, 613) interconnected to the server system (60) by means of communication, and controlled by the server system (60) after being interconnected to the server system (60).

17. The smart system of claim 16, wherein the smart system further includes a video/audio playing system (616), the smart platform device is connected to the video/audio playing system (616) by the server system (60), the video/audio playing system (616) includes an amplifier, a speaker system, a video/audio source, and the smart platform device is configured to operate the video/audio playing system (616) according to a user command.

## Patentansprüche

1. Intelligente-Plattform-Vorrichtung (10), aufweisend:
einen Hauptkörper, welcher aufweist:
eine Plattform (40), welche eine Fläche zum Platzieren eines Objekts ist,
einen oder mehrere geschlossene oder offene Ablageplätze (105, 103), und
eine Energieversorgungsvorrichtung, welche konfiguriert ist, um eine elektronische Vorrichtung (30) mit elektrischer Energie zu versorgen, und
ein Schaltkreissystem, aufweisend:
ein Drahtlose-Kommunikation-Modul (201), welches elektrisch mit dem Steuerungsschaltkreis (200) verbunden ist und konfiguriert ist, um sich mit einer externen Vorrichtung drahtlos zu verbinden,
einen Energieverwaltungsschaltkreis (210), welcher elektrisch mit dem Steuerungsschaltkreis (200) verbunden ist und einen Schaltkreis, welcher mit einer Wechselstromquelle (AC) verbunden ist, und
einen Schaltkreis aufweist, welcher mit einer Energiespeichervorrichtung (DC) verbunden ist, und
einen Ladeschaltkreis (203, 203'), welcher elektrisch mit dem Energieverwaltungsschaltkreis (210) verbunden ist und konfiguriert ist, um die elektrische Energie bereit zu stellen, welche mittels der Energieversorgungsvorrichtung geliefert wird,
**dadurch gekennzeichnet, dass**:
der Hauptkörper ferner ein Antriebssystem aufweist, welches konfiguriert ist, um die Intelligente-Plattform-Vorrichtung (10), welche sich in einem Raum bewegt, anzutreiben,
und dass das Schaltkreissystem ferner aufweist:
einen Steuerungsschaltkreis (200), welcher konfiguriert ist, um die Intelligente-Plattform-Vorrichtung (10) zu steuern, welche in dem Raum in Betrieb ist, wobei der Steuerungsschaltkreis (200) elektrisch mit einem Antriebsschaltkreis (207) des Antriebssystems verbunden ist, und wobei der Antriebsschaltkreis (207) eine Antriebseinheit (208) steuert, um die Intelligente-Plattform-Vorrichtung (10) anzutreiben, um sich in dem Raum zu bewegen, und
einen Positionserfassungsschaltkreis (305), welcher elektrisch mit dem Steuerungsschaltkreis (200, 200') verbunden ist, wobei der
Positionserfassungsschaltkreis (305) konfiguriert ist, um eine Position der elektronischen Vorrichtung (30) an der Plattform (40) zu erfassen, wenn die elektronische Vorrichtung (30) an der Plattform (40) angeordnet ist,
wobei der Steuerungsschaltkreis (200, 200') konfiguriert ist, um ein Positionssignal zu generieren, welches ein Befehl ist, welcher einem Ladetreiberschaltkreis (301) bereitgestellt wird,
wobei der Ladeschaltkreis (203, 203') ferner elektrisch mit dem Ladetreiberschaltkreis (301) und einer Ladeschnittstelle (303) verbunden ist,
und wobei der Ladetreiberschaltkreis (301) die Ladeschnittstelle (303) gemäß dem Befehl ansteuert, welcher mittels des Steuerungsschaltkreises (200, 200') generiert wird.

2. Intelligente-Plattform-Vorrichtung gemäß Anspruch 1, wobei die Energieversorgungsvorrichtung eine Ladesteckdose oder eine Drahtloses-Laden-Vorrichtung ist.

3. Intelligente-Plattform-Vorrichtung gemäß Anspruch 2, wobei die Drahtloses-Laden-Vorrichtung eine Drahtloses-Laden-Zone (101) in der Plattform (40) des Hauptkörpers belegt.

4. Intelligente-Plattform-Vorrichtung gemäß Anspruch 1, wobei das Schaltkreissystem ferner einen Lokalisierungssensor (51, 52, 53) aufweist, welcher elektrisch mit dem Steuerungsschaltkreis (200) verbunden ist und konfiguriert ist, um eine Position der elektronischen Vorrichtung (30, 401) an der Plattform (40) zu erfassen, und wobei der Befehl, welcher dem Ladetreiberschaltkreis (301) bereitgestellt wird, aus einem Positionssignal generiert ist, welches mittels des Steuerungsschaltkreises (200) generiert wird.

5. Intelligente-Plattform-Vorrichtung gemäß Anspruch 1, wobei das Drahtlose-Kommunikation-Modul (201) konfiguriert ist, um eine Richtungsmessung und eine Entfernungsmessung mittels Sendens und Empfangens drahtloser Signale durchzuführen, um eine Innenraum-Lokalisierung durchzuführen.

6. Intelligente-Plattform-Vorrichtung gemäß Anspruch 1, wobei das Schaltkreissystem der Intelligente-Plattform-Vorrichtung ferner einen oder mehrere Sensoren (202) aufweist.

7. Intelligente-Plattform-Vorrichtung gemäß Anspruch 6, wobei der eine oder die mehreren Sensoren (202) einen Bildsensor aufweisen, welcher elektrisch mit dem Steuerungsschaltkreis (200) verbunden ist und konfiguriert ist, um Bilder des Raums zu erlangen, um Aufzeichnen und Bilderkennung durchzuführen.

8. Intelligente-Plattform-Vorrichtung gemäß Anspruch 7, welche ferner eine Lidar-Vorrichtung aufweist, wobei der Bildsensor konfiguriert ist, um mit der Lidar-Vorrichtung zusammenzuarbeiten derart, dass die Intelligente-Plattform-Vorrichtung Hindernisse in dem Raum meidet, wenn sie sich bewegt.

9. Intelligente-Plattform-Vorrichtung gemäß Anspruch 1, wobei das Schaltkreissystem der Intelligente-Plattform-Vorrichtung ferner aufweist: einen Lautsprecher (204), welcher konfiguriert ist, um eine Sprachnachricht zum Kommunizieren mit einem Benutzer zu generieren, und/oder ein Mikrofon (205), welches konfiguriert ist, um eine Stimme zu empfangen, welche mittels des Steuerungsschaltkreises (200) interpretiert wird, um ein Befehl zum Steuern der Intelligente-Plattform-Vorrichtung zu sein.

10. Intelligente-Plattform-Vorrichtung gemäß Anspruch 1, wobei der Hauptkörper der Intelligente-Plattform-Vorrichtung ferner eine Temperatursteuerungsbox (107) aufweist, welche mit einem Thermoelektrische-Kühlung-Chip eingebaut ist, und wobei eine Kühlzone oder eine Heizzone der Temperatursteuerungsbox (107) mittels eines Temperatursteuerungsschaltkreises (206) des Schaltkreissystems realisiert ist, welcher konfiguriert ist, um eine Stromrichtung der Temperatursteuerungsbox (107) zu schalten.

11. Intelligente-Plattform-Vorrichtung gemäß Anspruch 1, wobei das Drahtlose-Kommunikation-Modul (201) konfiguriert ist, um sich mit einem Serversystem (60) drahtlos zu verbinden, welches in dem Raum oder in einer Cloud angeordnet ist.

12. Intelligentes System, aufweisend:
ein Benutzerendgerät (100), und
eine Intelligente-Plattform-Vorrichtung (10) gemäß einem der Ansprüche 1 bis 11,
wobei das Drahtlose-Kommunikation-Modul (201) ferner konfiguriert ist, um sich mit dem Benutzerendgerät (100) drahtlos zu verbinden, um einen Befehl zu empfangen, welcher mittels des Benutzerendgeräts (100) generiert wird, und wobei das Drahtlose-Kommunikation-Modul (201) ferner konfiguriert ist, um eine Richtungsmessung und eine Abstandsmessung durchzuführen mittels Sendens und Empfangens drahtloser Signale, um eine Innenraum-Lokalisierung durchzuführen.

13. Intelligentes System gemäß Anspruch 12,
wobei das Benutzerendgerät (100) konfiguriert ist, um ein Anwendungsprogramm auszuführen, um sich mit der Intelligente-Plattform-Vorrichtung zu verbinden, um drahtlose Kommunikation mit der Intelligente-Plattform-Vorrichtung durchzuführen und um einen Befehl zum Steuern der Intelligente-Plattform-Vorrichtung zu generieren,
wobei die Intelligente-Plattform-Vorrichtung konfiguriert ist, um Elektrische-Energie-Daten des Benutzerendgeräts (100) mittels des Anwendungsprogramms zu erlangen,
und wobei, wenn die elektrische Energie des Benutzerendgeräts (100) geringer als ein Schwellenwert ist, der Steuerungsschaltkreis (200) konfiguriert ist, um das Antriebssystem zu steuern, um die Intelligente-Plattform-Vorrichtung anzutreiben, sich dorthin zu bewegen, wo sich das Benutzerendgerät (100) befindet, um das Benutzerendgerät (100) mittels der Energieversorgungsvorrichtung zu laden.

14. Intelligentes System gemäß Anspruch 13, wobei das Anwendungsprogramm, welches mittels des Benutzerendgeräts (100) ausgeführt wird, konfiguriert ist, um einen Textbefehl, einen handgeschriebenen Befehl oder einen Sprachbefehl, welcher von dem Benutzer eingegeben wird, in den Befehl zum Steuern der Intelligente-Plattform-Vorrichtung umzuwandeln.

15. Intelligentes System gemäß Anspruch 13, wobei die Intelligente-Plattform-Vorrichtung konfiguriert ist, um eine relative Richtung und einen relativen Abstand zwischen dem Benutzerendgerät (100) und der Intelligente-Plattform-Vorrichtung zu erlangen mittels Ausführens einer Lokalisierungsfunktion des Drahtlose-Kommunikation-Moduls (201) des Schaltkreissystems.

16. Intelligentes System gemäß einem der Ansprüche 12 bis 15, ferner aufweisend:
ein Serversystem (60), welches in einem lokalen Netzwerk oder einer Cloud angeordnet ist, und
eine oder mehrere Intelligente-Plattform-Vorrichtungen (611, 612, 613), welche mit dem Serversystem (60) mittels Kommunikation verbunden sind und welche mittels des Serversystems (60) gesteuert werden, nachdem sie mit dem Serversystem (60) verbunden worden sind.

17. Intelligentes System gemäß Anspruch 16, wobei das intelligente System ferner ein Video-/Audio-Wiedergabe-System (616) aufweist, die Intelligente-Plattform-Vorrichtung mittels des Serversystems (60) mit dem Video-/Audio-Wiedergabe-System (616) verbunden ist, das Video-/Audio-Wiedergabe-System (616) eine Verstärkungsvorrichtung, ein Lautsprechersystem und eine Video-/Audio-Quelle aufweist, und die Intelligente-Plattform-Vorrichtung konfiguriert ist, um das Video-/Audio-Wiedergabe-System (616) gemäß einem Benutzerbefehl zu betreiben.

## Revendications

1. Dispositif de plateforme intelligente (10), comprenant :
un corps principal comprenant :
une plateforme (40) étant un plan pour le placement d'un objet, un ou plusieurs espaces de stockage fermés ou ouverts (105, 103), et un dispositif de source d'énergie configuré pour fournir de l'énergie électrique à un dispositif électronique (30) ; et
un système de circuit comprenant :
un module de communication sans fil (201) connecté électriquement au circuit de commande (200), et configuré pour s'interconnecter sans fil à un dispositif externe,
un circuit de gestion d'énergie (210) connecté électriquement au circuit de commande (200), et comprenant un circuit connecté à une source d'alimentation en courant alternatif (AC) et un circuit connecté à un dispositif de stockage d'énergie (DC), et
un circuit de charge (203, 203') connecté électriquement au circuit de gestion d'énergie (210), et configuré pour fournir l'énergie électrique fournie par le dispositif de source d'énergie,
**caractérisé en ce que**
le corps principal comprend en outre un système d'entraînement configuré pour entraîner le dispositif de plateforme intelligente (10) se déplaçant dans un espace ;
et **en ce que** le système de circuit comprend en outre
un circuit de commande (200) configuré pour commander le dispositif de plateforme intelligente (10) fonctionnant dans l'espace, le circuit de commande (200) étant électriquement connecté à un circuit d'entraînement (207) du système d'entraînement, et le circuit d'entraînement (207) commandant une unité d'entraînement (208) pour entraîner le dispositif de plateforme intelligente (10) afin qu'il se déplace dans l'espace, et
un circuit de détection d'emplacement (305) connecté électriquement au circuit de commande (200, 200'), dans lequel le circuit de détection d'emplacement (305) est configuré pour détecter un emplacement du dispositif électronique (30) sur la plateforme (40) lorsque le dispositif électronique (30) est disposé sur la plateforme (40),
dans lequel le circuit de commande (200, 200') est configuré pour générer un signal d'emplacement qui est une commande fournie à un circuit d'entraînement de charge (301),
dans lequel le circuit de charge (203, 203') est en outre connecté électriquement au circuit d'entraînement de charge (301) et à une interface de charge (303),
et dans lequel le circuit d'entraînement de charge (301) entraîne l'interface de charge (303) selon la commande générée par le circuit de commande (200, 200').

2. Dispositif de plateforme intelligente selon la revendication 1, dans lequel le dispositif de source d'alimentation est une prise de charge ou un dispositif de charge sans fil.

3. Dispositif de plateforme intelligente selon la revendication 2, dans lequel le dispositif de charge sans fil occupe une zone de charge sans fil (101) dans la plateforme (40) du corps principal.

4. Dispositif de plateforme intelligente selon la revendication 1, dans lequel le système de circuit comprend en outre un capteur de positionnement (51, 52, 53) connecté électriquement au circuit de commande (200) et configuré pour détecter un emplacement du dispositif électronique (30, 401) sur la plateforme (40), et dans lequel la commande fournie au circuit d'entraînement de charge (301) est générée à partir d'un signal d'emplacement généré par le circuit de commande (200) .

5. Dispositif de plateforme intelligente selon la revendication 1, dans lequel le module de communication sans fil (201) est configuré pour effectuer un sondage de direction et un sondage de distance en émettant et en recevant des signaux sans fil pour effectuer un positionnement intérieur.

6. Dispositif de plateforme intelligente selon la revendication 1, dans lequel le système de circuit du dispositif de plateforme intelligente comprend en outre un ou plusieurs capteurs (202).

7. Dispositif de plateforme intelligente selon la revendication 6, dans lequel ledit un ou lesdits plusieurs capteurs (202) comprennent un capteur d'image connecté électriquement au circuit de commande (200) et configuré pour obtenir des images de l'espace pour effectuer un enregistrement et une reconnaissance d'image.

8. Dispositif de plateforme intelligente selon la revendication 7, comprenant en outre un lidar, dans lequel le capteur d'image est configuré pour coopérer avec le lidar, de sorte que le dispositif de plateforme intelligente évite les obstacles dans l'espace lorsqu'il se déplace.

9. Dispositif de plateforme intelligente selon la revendication 1, dans lequel le système de circuit du dispositif de plateforme intelligente comprend en outre un haut-parleur (204) configuré pour générer un message vocal pour communiquer avec un utilisateur et/ou un microphone (205) configuré pour recevoir une voix qui est interprétée par le circuit de commande (200) comme étant une commande pour commander le dispositif de plateforme intelligente.

10. Dispositif de plateforme intelligente selon la revendication 1, dans lequel le corps principal du dispositif de plateforme intelligente comprend en outre un boîtier de commande de température (107) intégré avec une puce de refroidissement thermoélectrique, et une zone de refroidissement ou une zone de chauffage du boîtier de commande de température (107) est réalisée par un circuit de commande de température (206) du système de circuit configuré pour commuter une direction de courant du boîtier de commande de température (107).

11. Dispositif de plateforme intelligente selon la revendication 1, dans lequel le module de communication sans fil (201) est configuré pour s'interconnecter sans fil à un système serveur (60) disposé dans l'espace ou dans un nuage.

12. Système intelligent, comprenant :
un dispositif utilisateur (100)
et un dispositif de plateforme intelligente (10) selon l'une quelconque des revendications 1 à 11,
dans lequel le module de communication sans fil (201) est en outre configuré pour s'interconnecter sans fil au dispositif utilisateur (100) afin de recevoir une commande générée par le dispositif utilisateur (100), et dans lequel le module de communication sans fil (201) est en outre configuré pour effectuer un sondage de direction et un sondage de distance en transmettant et en recevant des signaux sans fil pour effectuer un positionnement intérieur.

13. Système intelligent selon la revendication 12,
dans lequel le dispositif utilisateur (100) est configuré pour exécuter un programme d'application pour s'interconnecter au dispositif de plateforme intelligente, pour effectuer une communication sans fil avec le dispositif de plateforme intelligente, et pour générer une commande pour commander le dispositif de plateforme intelligente ;
dans lequel le dispositif de plateforme intelligente est configuré pour obtenir des données de puissance électrique du dispositif utilisateur (100) par le programme d'application,
et dans lequel, lorsque la puissance électrique du dispositif utilisateur (100) est inférieure à un seuil, le circuit de commande (200) est configuré pour commander le système d'entraînement pour entraîner le dispositif de plateforme intelligente se déplaçant vers l'endroit où le dispositif utilisateur (100) est situé pour charger le dispositif utilisateur (100) par le dispositif de source d'énergie.

14. Système intelligent selon la revendication 13, dans lequel le programme d'application exécuté par le dispositif utilisateur (100) est configuré pour convertir une commande textuelle, une commande manuscrite ou une commande vocale entrée par l'utilisateur dans la commande pour commander le dispositif de plateforme intelligente.

15. Système intelligent selon la revendication 13, dans lequel le dispositif de plateforme intelligente est configuré pour obtenir une direction relative et une distance relative entre le dispositif utilisateur (100) et le dispositif de plateforme intelligente en exécutant une fonction de positionnement du module de communication sans fil (201) du système de circuit.

16. Système intelligent selon l'une quelconque des revendications 12 à 15, comprenant en outre :
un système serveur (60) disposé dans un réseau local ou un
un ou plusieurs dispositifs de plateforme intelligente (611, 612, 613) interconnectés au système serveur (60) par des moyens de communication, et commandés par le système serveur (60) après avoir été interconnectés au système serveur (60).

17. Système intelligent selon la revendication 16, dans lequel le système intelligent comprend en outre un système de lecture vidéo/audio (616), le dispositif de plateforme intelligente est connecté au système de lecture vidéo/audio (616) par le système serveur (60), le système de lecture vidéo/audio (616) comprend un amplificateur, un système de haut-parleur, une source vidéo/audio, et le dispositif de plateforme intelligente est configuré pour faire fonctionner le système de lecture vidéo/audio (616) selon une commande utilisateur.
